# EUROPEAN PATENT APPLICATION

(11) **EP 1 598 040 A2**
(43) Date of publication of application: **23.11.2005**
(21) Application number: 05380102.3
(22) Date of filing: 20.05.2005
(51) Int. Cl.: A61G 3/06, B60P 1/43

(54) **Ramp for accessing vehicles**

(30) Priority: 21.05.2004 ES 200401223
(71) Applicant: Fine Access, S.L., 41016 Sevilla (ES)
(72) Inventor: Salazar Corcuera, Javier, 26509 Agoncillo - La Rioja (ES)
(74) Representative: Carvajal y Urquijo, Isabel

(57) **Abstract**

A ramp for accessing vehicles comprising a casing (1) open at one of its walls which is closed by means of a folding door (3) and in which a platform (8) extractable through the open wall, as well as a mechanism responsible for shifting said platform between extraction and retraction position are housed. The platform is connected by its rear edge to the extraction mechanism by means of a hinge (16) which is outside the casing in the maximum platform extraction position. The bottom portion of the platform (8) rests on rolling elements housed in the casing (1).

## Description

The present invention refers to a ramp for accessing vehicles, intended for being assembled on the vehicles themselves for facilitating passengers with reduced mobility to get in or out of the vehicle, overcoming gaps in floor level between the vehicle and the ground or sidewalk surface.

More specifically, the ramp of the invention is of the type comprising a straight prismatic shaped casing or box with a square or rectangular plan form, of small height and open at one of its walls, housing within the casing a platform or step which is extractable through the open wall and a mechanism responsible for extracting and retracting said step.

A ramp of this type is disclosed in Spanish patent application number 200201337 of the same applicants. In this ramp the mechanism responsible for extracting and retracting the platform is made up of a drive motor with a gear ring meshing with a rack parallel to the shifting direction of the step. The motor is fixed to a bridge assembled on shifting carriage on rails parallel to the rack.

Patent document ES 2187314 discloses a ramp in which the drive mechanism consists in two screws actuated from a fixed motor, on which screws there are assembled as many other nuts that are attached to a mobile structure.

In any of the cases set forth the platform or step is joined to the mobile structure or bridge by means of swivelling elements or hinges allowing lifting of the platform, once completely extracted from the casing, until the back edge of the platform reaches the height of the upper surface of the casing, all this to prevent the formation of a step between the platform and the casing. Furthermore, the platform has means for guiding or driving its shifting from the casing between its extracted and retracted positions. All this involves a complication in the mechanisms controlling platform position and shifting.

An object of the present invention is to simplify the constitution of the ramp, eliminating the platform guiding means and essentially the means of lifting the platform in its extracted position.

In the ramp of the invention, regardless of the make-up of the platform drive mechanism, said platform cannot be lifted in its extracted position, but rather stays at the same height as when shifting within the casing, without however producing a step between said platform and the upper surface of the casing.

To this end, according to the present invention, the platform or step is connected at its rear edge to the bridge or mobile structure forming part of the linear drive mechanism by means of a hinge with a pin that is parallel to the open wall of the casing. That is, the platform is hinged to said bridge or mechanism according to a rotation axis perpendicular to the shifting direction of said platform. This hinge is located outside the casing when the platform reaches the maximum extraction position, position in which it may freely swivel in order to adopt a position with a downward slope until the free front edge of the platform rests on the ground or sidewalk surface and passenger transit will occur between this surface and the vehicle.

According to another feature of the invention, the casing has internally assembled rolling elements placed in an position adjacent to its open wall and on which the bottom portion of the platform rests when it is partially or completely inside the casing. When the platform reaches its maximum extraction position it swivels about the aforementioned hinge axis, as previously mentioned, maintaining its support on the rolling elements, so that the platform shall rest on its rear edge on the rolling elements and on its free front edge on the ground or sidewalk surface.

So as to avoid a step occurring between the platform surface in its extracted position and the upper surface of the casing, the cover closing the upper portion of this casing includes a swivelling section adjacent to the open wall and which in the maximum platform extraction position rests on the mobile structure or bridge of the linear drive mechanism, having a downward inclination approximately as an extension of the platform. When said platform is in its completely retracted position, the swivelling section of the cover rests against the hatch closing the open wall of the casing, then being in a practically coplanar position with the rest of the cover.

In the ramp of the invention the platform is also joined to the carriages of the mobile structure or bridge of the linear drive mechanism by means of strips resting on the lower surface of said platform and driving it in a rising direction with a force less than its weight. These elements act as dampeners for platform lowering, when it reaches its maximum extraction position until it rests upon the ground or sidewalk surface.

The features of the ramp of the invention are set forth below with greater detail in the following description, made with reference to the attached drawings, in which a non-limiting embodiment is shown.

In the drawings:
Figure 1 shows a perspective view of a ramp made up according to the invention, with the platform retracted.
Figure 2 shows a view similar to that of Figure 1, with the platform or step in its extracted position.
Figure 3 shows an upper plan view of the ramp, without the upper cover or top and with the platform or step extracted.
Figure 4 shows a longitudinal sectional view of the ramp, with the step extracted, taken along the IV-IV section line of Figure 2.
Figure 5 corresponds to detail A of Figure 4, enlarged.
Figure 6 shows a partial cross sectional view of the ramp, taken along the VI-VI section line of Figure 3, enlarged.
Figure 7 shows a partial section of the ramp, taken along the VII-VII section line of Figure 3.

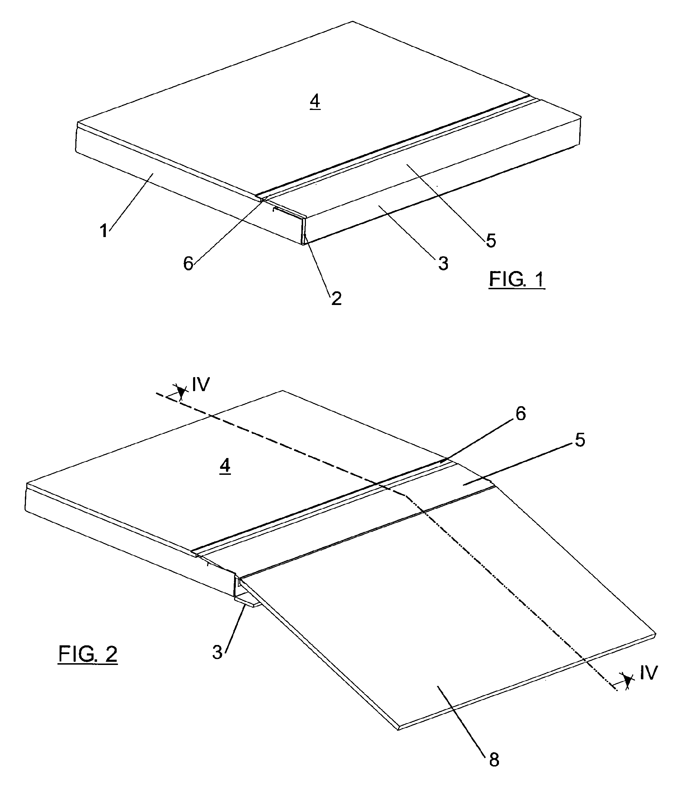

As can be seen in Figures 1 to 3, the ramp of the invention comprises a casing 1 of straight prismatic configuration which may adopt a rectangular or square plan form and which is open on one of its side walls 2, open wall which is closed by means of a hatch 3 hinged at its lower edge to the bottom of the casing 1.

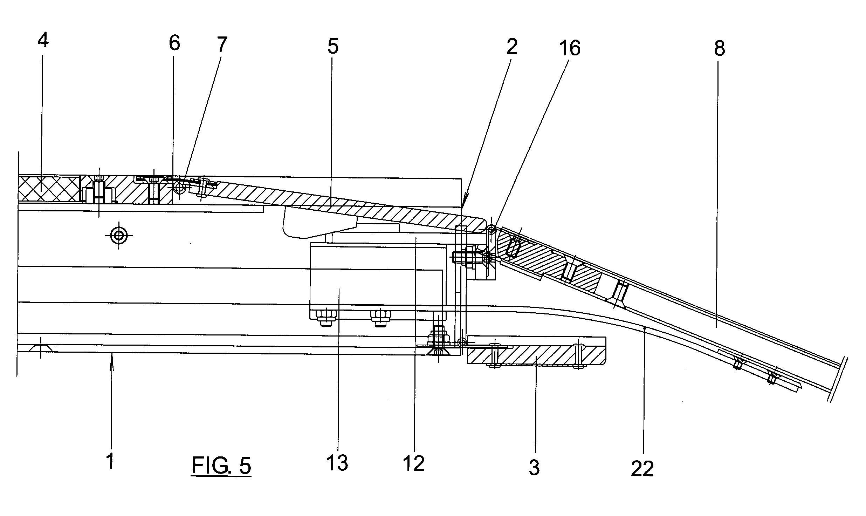

In its upper portion the casing 1 is closed by a cover 4 including a swivelling front section 5 of uniform width, joined to the rest of the cover 4 by means of a hinge 6, the hinge axis 7 of which is parallel to the open front wall 2, as shown in Figure 5.

Housed within this casing there is a platform 8 that can be completely housed within the casing 1, a situation in which the hatch 3 closes the wall 2, and a maximum extraction position, shown in Figure 2, in which the hatch 3 is kept open under the platform 8.

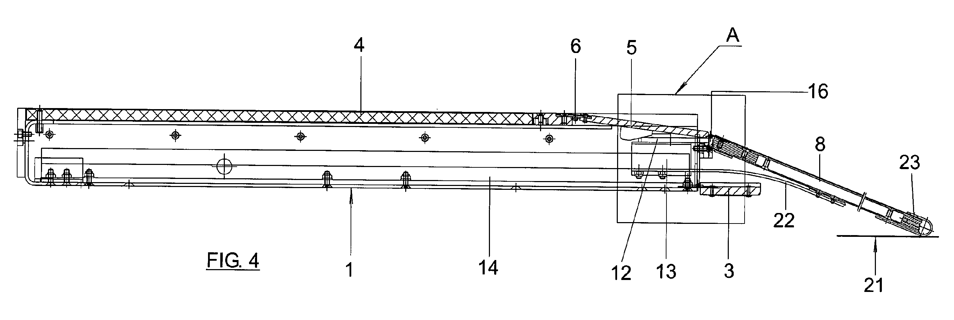

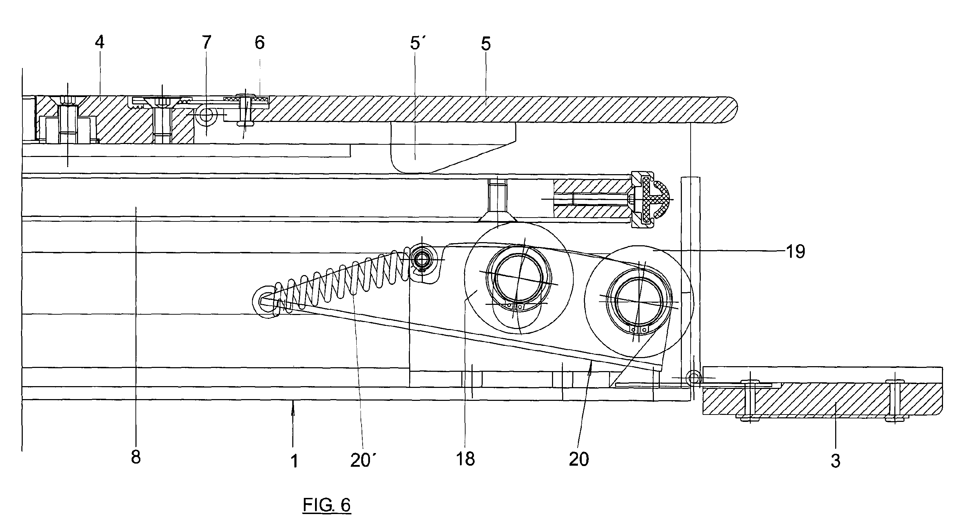

In the position of Figures 1 and 6, with the platform 8 retracted, the front section 5 of the cover is approximately in a coplanar position with said cover 4, resting by means of the lower support 5' on the extractable platform 8, whereas when the platform 8 is extracted, Figures 2 and 4, the section 5 has a downward slope, approximately as an elongation of the platform 8.

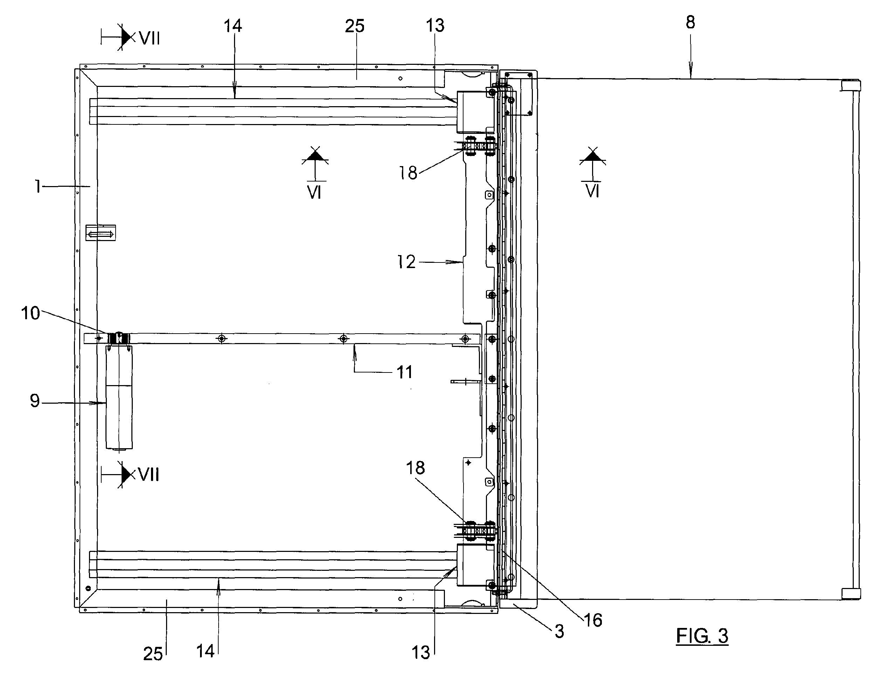

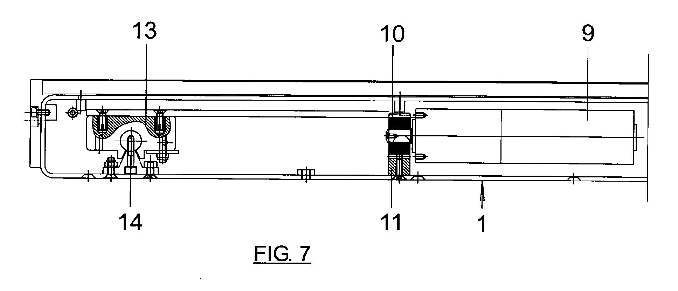

Also housed inside the casing 1 is the mechanism responsible for shifting the platform 8 between the retracted and extracted positions. This mechanism may be made up, for example, as can be seen in Figures 3 and 7, of a motor 9 with a pinion 10 meshing with a rack 11 parallel to the shifting direction of the platform 8. The motor 9 is fixed to a bridge 12 assembled on two carriages 13 shifting on guides or rails 14 parallel to the rack 11.

Since the motor 9 is attached to the bridge 12, actuation of said motor by means of rotation of the pinion 10 and the meshing thereof with the rack 11, will cause the bridge 12 to shift in one direction or the other.

The platform 8 is connected at its rear edge to the bridge 12 by means of a hinge 16 with an axis parallel to the open wall 2 and therefore perpendicular to the rack 11, as can be seen in Figure 5.

Also assembled inside the casing 1 close to the open wall 2, are rolling elements which may be made up of two freely rotating rollers 18 and 19, assembled on a swivelling support 20 driven towards its upper limit position by means of a spring 20'. When the platform 8 shifts inside the casing or is in its maximum retraction position, it will rest on the roller 18 at its front edge. When the platform 8 reaches its maximum extraction position, the hinge 16 between said platform and the bridge 12 is outside the casing 1, swivelling in a downward direction until resting on the ground or sidewalk surface 21 at its free edge. At the same time the front section 5 of the platform will adopt its swivelled position, remaining approximately as an extension of the platform 8, such that there is no step at all between the planar surface of the cover 4 and the platform 8.

As can be seen in Figure 5, the platform 8 further rests in its extracted position on strips 22 fixed to the carriages 13, strips driving the platform in an upward direction with a force that is less than the weight thereof. These strips 12 act as dampening elements during lowering or descent of the platform 8 once it is completely extracted, until the front edge 23 thereof rests on the ground or sidewalk surface 21.

The casing 1 may internally have longitudinal steps 25 on which the platform 8 will rest during its shifting inside the casing 1 and when it is in its maximum retraction position.

Since the rolling elements 18 and 19 are assembled on the swivelling support 20, they may be useful as elements to detect whether a person is on the platform 8 during its extraction stage. However, these rolling elements could adopt a different makeup.

## Claims

1. A ramp for accessing vehicles comprising a casing (1) in a straight prismatic shaped box, of square or rectangular plan form and small height, open at one of its walls closed by means of a folding door (3); in which casing (1) a platform (8) extractable through the open wall (2) as well as a linear drive mechanism responsible for shifting said platform (8) between extraction and retraction positions are housed, **characterised in that** said platform (8) is connected at its rear edge to the extraction mechanism by means of a hinge (6) with its axis parallel to the open door of the casing, which hinge (6) is outside the casing in the maximum platform extraction position; and **in that** the casing (1) internally has rolling elements assembled, placed in a position adjacent to its open wall (2), on which the bottom portion of the platform (8) rests while said platform (8) is completely or partially inside the casing (1) and on which it swivels, when reaching its maximum extraction position to have a downward slope.

2. A ramp according to claim 1, **characterised in that** the casing (1) is closed at the top portion by means of a cover (4) including a swivelling section (5) adjacent to the open wall (2), which in the maximum platform extraction position has a downward slope, approximately as an extension of said platform (8), while in the retracted position of the platform it rests against the hatch closing the open wall (2) and is in a coplanar position with the rest of the cover (4).

3. A ramp according to claim 2, **characterised in that** the swivelling section (5) is of a uniform width and is joined to the rest of the cover (4) by means of a hinge (6) with an axis (7) parallel to the open wall (2) of the casing (1).

4. A ramp according to claim 1, **characterised in that** the linear drive mechanism includes strips (22) projecting from the casing (1) through the open wall (2) thereof, in the extracted position of the platform (8), so as to form elastic support elements for said platform (8) driving it in an upward direction with a force less than its weight and acting as dampening elements during platform lowering, when it reaches its maximum extraction position.

5. A ramp according to claim 1, **characterised in that** immediately under the cover (4), the casing (1) has as many longitudinal end steps (25), perpendicular to the open wall (2), on which the platform (8) rests when it is completely or partially inside the casing (1) in a position parallel to the cover (4).
